# EUROPEAN PATENT APPLICATION

(11) **EP 0 728 417 A2**
(43) Date of publication of application: **28.08.1996**
(21) Application number: 96102275.3
(22) Date of filing: 15.02.1996
(51) Int. Cl.: A23G 9/28, A23G 9/20

(54) **Machine for making soft ice creams**

(30) Priority: 24.02.1995 IT GE950019
(71) Applicant: ALI S.p.A. - CARPIGIANI GROUP, 40011 Anzola Emilia (Bologna) (IT)
(72) Inventor: Cocchi, Gino, I-40137 Bologna (IT); Bortolotti, Stefano, I-40050 Monteveglio, Bologna (IT)
(74) Representative: Porsia, Attilio, Dr.

(57) **Abstract**

Machine for making soft ice creams, comprising essentially at least one working chamber (100) in communication with a supply tank and closed at the front by a hatch (2) supporting the ice cream dispensing means; said ice cream dispensing means comprise a cylindrical part (3) communicating, from near its lower end, with said working chamber (100) and being provided with an axial dispensing hole (103) and a plunger (4) that can be moved inside said cylinder (3) and that controls the dispensing of the ice cream, and provided, at the dispensing hole (103), with means (5) of distributing two or more syrup essences; the means (5) of distributing the syrups comprise two or more annular manifolds (306) coaxial with the dispensing hole (403), each communicating with an inlet passage (205) connected to a container of syrup, and each provided with a ring of radial holes (316) leading into the flow of ice cream, said manifolds (306) being mounted on the end of the dispensing cylinder (3) having the dispensing hole (403).

## Description

The present invention relates to machines for making so-called "soft" ice cream, and of these, those which comprise, in particular, means of distributing syrup essences onto said ice creams.

Machines for making "soft" ice cream essentially comprise a working cylinder fitted with internal stirrers and closed at the front by a hatch supporting the means for dispensing the ice cream and a supply tank, which refills the working cylinder with the mixture of liquid mixed with air. The dispensing means comprise a cylindrical component communicating, near its lower end, with said working cylinder and having an axial dispensing hole. A movable plunger is mounted inside said cylinder and can be displaced by means of suitable operating means in such a way that the plunger wholly or partly cuts off the port of the hole leading from the working cylinder and closes or opens the dispensing hole.

There are fundamentally two types of soft ice cream machine, namely multi-cylinder machines, in which each cylinder processes a different flavour of ice cream; and single-cylinder machines, in which a single type of ice cream is produced with a neutral flavour and is then flavoured with a variety of syrup essences.

In these latter soft ice cream machines there is usually a syrup essence distributing device connected to the ice cream dispensing means; the purpose of the essence is to enhance both the appearance and the taste of the product. This essence distributing device generally comprises a chamber connected to the dispensing hole of the dispensing means and communicating, via one or more passages controlled by suitable regulating means, with one or more containers of syrup essence.

In some known syrup distributor devices the ice cream is partly or completely mixed with the syrup, as for example in USA patent no. 4378164 by the same applicant and USA patent no. 3830407, or others that simply pour the syrup over the surface of the ice cream, as in USA patent no. 3149756 by the same applicant or Italian patent no. 803845.

One common defect in all these syrup essence distributing devices is that when these devices are designed for flavouring ice cream with different kinds of syrup that can be varied as desired, the flavour is always introduced in the same part of the device, which inevitably means that each successive syrup is contaminated with the previous syrup. This is highly deleterious to both the appearance and taste of the resulting product.

The object of the present invention is to provide a machine for making soft ice cream flavoured with syrups, said machine being provided with a system for flavouring the ice creams that allows the flavour of the syrup essence to be selected as required from among two or more options, without any possibility of contamination between the different flavours of the syrup essences used and without it being necessary for the machine to be cleaned.

The subject of the present invention is therefore a machine for making soft ice creams, comprising essentially at least one working chamber in communication with a supply tank and closed at the front by a hatch supporting the ice cream dispensing means, which ice cream dispensing means comprise a cylindrical part communicating, from near its lower end, with said working chamber and being provided with an axial dispensing hole and a plunger that can be moved inside said cylinder and controls the dispensing of the ice cream, and provided, at the dispensing hole, with means of distributing two or more syrup essences onto the ice cream, the machine being characterized in that said means of distributing the syrups comprise two or more annular manifolds coaxial with said dispensing hole, each communicating with an inlet passage connected to a container of syrup essence, and each provided with a ring of radial holes leading into the flow of ice cream as it passes out of said dispensing hole, said manifolds being mounted on the end of the dispensing cylinder having the dispensing hole.

In one embodiment of the invention, said annular manifolds are formed integrally, in the form of grooves, in a cylindrical nozzle in which a central axial channel communicates with said grooves through a series of radial passages for each of the grooves, said nozzle being inserted in a distributing block consisting of a parallelepiped containing an axial cylindrical cavity and, on one face, a series of holes communicating with passages perpendicular to said cavity and opening into it, these holes being situated on mutually parallel transverse planes and being connected to the inlet passages of the syrup essences.

The machine thus designed will make it possible to make soft ice creams flavoured with syrups of different flavours, while being extremely practical to use, enabling the syrup essence to be changed in the simplest possible manner without allowing the flavours to become contaminated with each other, and at the same time achieving uniform flavouring of the ice cream.

Further advantages and characteristics of the present invention will become clear in the following description of an embodiment thereof. This description is provided by way of a non-limiting example with reference to the accompanying drawings, in which:
Figure 1 is a front elevation of the machine according to the present invention;
Figure 2 is a view on an enlarged scale in longitudinal section on the plane marked II-II in Fig. 1;
Figure 3 is a rear elevation of a detail of Figure 1; and
Figure 4 is a cross section on the plane marked IV-IV in Figure 2.

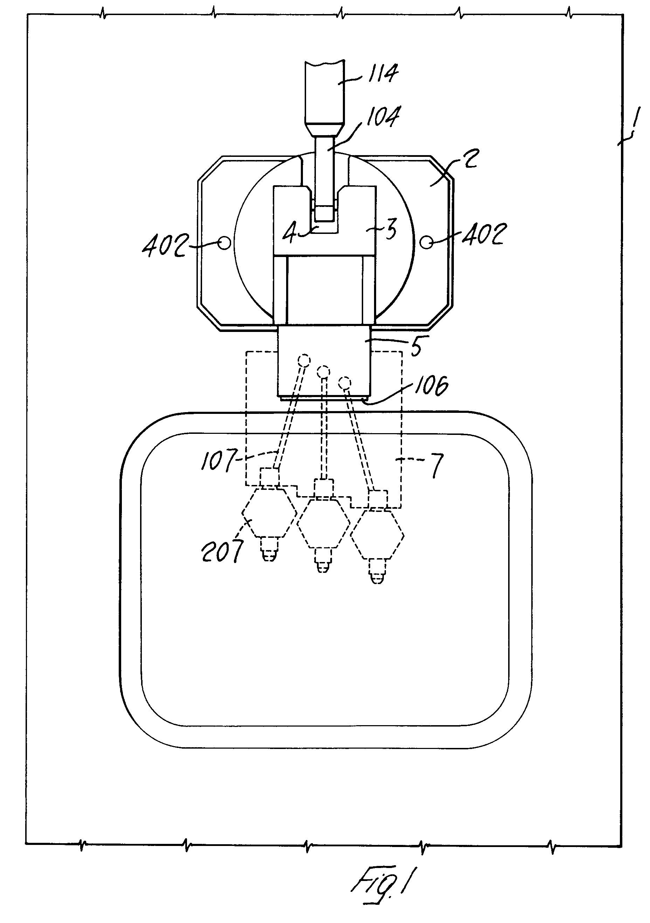

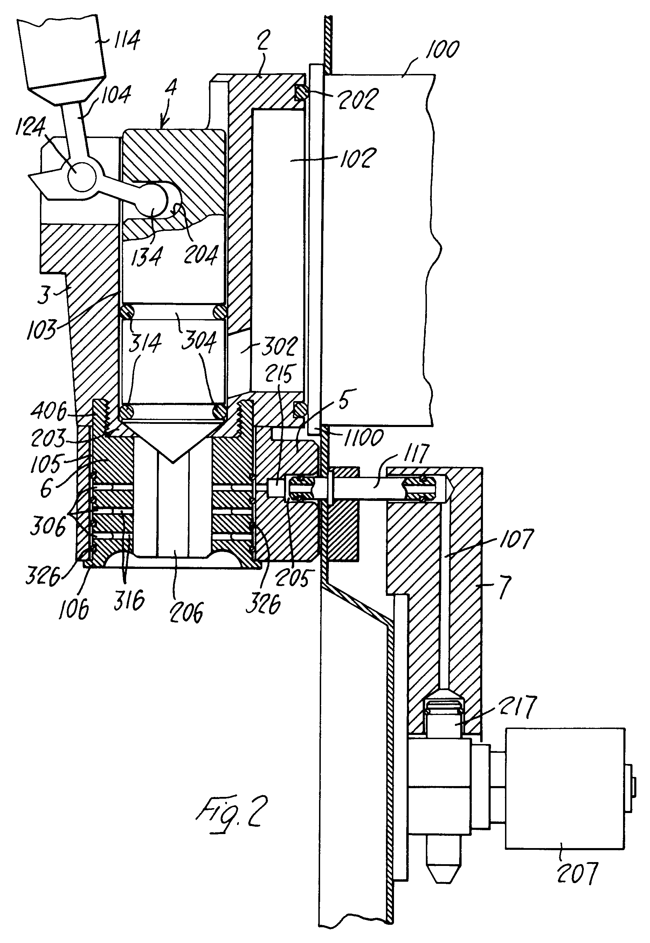

Figure 1 shows the machine for making soft ice creams according to the invention; the numeral 1 denotes the external frame of the machine, to which is attached, by suitable means of attachment 402, a hatch 2, which acts as the front wall of the working chamber of said machine (see Fig. 2). The hatch 2 has a dispensing cylinder 3, connected to the upper end of which is a lever 104 having a handle 114 to operate the plunger 4, that can be moved inside said cylinder 3. Connected to the lower end of said cylinder, however, in the manner described below, is the block 5 by means of which the syrup essences are distributed; inside the frame 1 of the machine of the invention are depicted, formed in the interior of an inlet block 7, the passages 107 carrying the syrups to the distributing block 5. The syrups are conveyed along the passages 107 to the distributing block 5 from their containers (not shown) situated inside the machine; the solenoid valves 207 are used to regulate their flow.

Figure 2 is an enlarged section on the plane marked II-II in Fig. 1. The hatch 2, as described above, acts as a front closure to the working chamber 100, whose flange 1100 is in contact with the rim of the hatch 2, made leaktight by the seals 202. In the inside face of the hatch a cavity 102 is formed in communication with the working chamber 100. The cavity 102 communicates with the aforesaid dispensing cylinder 3, or rather with its internal cylindrical cavity 103, via a passage 302 situated at its lower extremity. The plunger 4 can be moved up and down inside the cavity 103 of the cylinder 3 and contains the seals 314 in the recesses 304. It is moved by means of the lever 104 hinged to the cylinder 3 by the pin 124, its spherical end 134 being engaged in the recess 204 formed in the plunger 4. During its stroke the plunger cuts off the port of the passage 302 and closes the dispensing hole 403 when in its bottom position; whereas in its bottom position, it will leave the port of the passage 302 clear and open the dispensing hole 403.

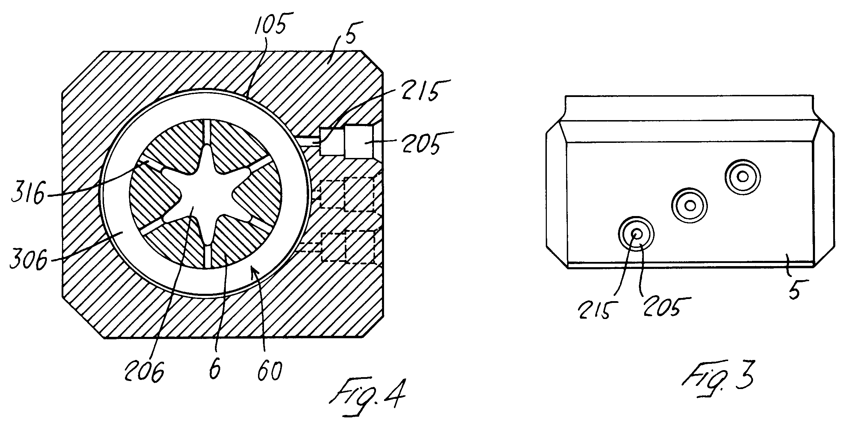

The lower end of the cylinder 3 connects, as described earlier, with a syrup essence distributing block 5, which contains an axial cylindrical cavity 105 and, on the side nearest the frame of the machine according to the invention, a series of holes (see Fig. 3) 205 communicating with passages 215 that open into said cylindrical cavity 105. Near the dispensing hole 403, the cylinder 3 has a threaded portion 203. The threaded nut portion 406 of the nozzle 6 is screwed onto this threaded portion; this nozzle has a flange 106 enabling the block 5 to be attached to the cylinder 3. The nozzle 6 has a central channel 206 coaxial with the dispensing hole 403 of the cylinder 3, and a series of mutually parallel circular grooves 306 sealed off from each other by seals 326. Said grooves communicate with the channel 206 through a series of passages 316 (see also Fig. 4). Each groove 306 communicates with a passage 215 which communicates in turn, via the coupling 117 inserted into it, with the syrup inlet means. The annular manifolds 60 are essentially bounded by the three walls of said grooves, by the inner wall of the cylindrical cavity 105 and by the seals 326.

The syrups are fed into the block 5 by a device comprising a series of passages 107 formed in an inlet block 7; this block communicates with the couplings 117 downstream, which connect the various passages to the various holes 205 of the block 5, and upstream with the couplings 217, which in turn connect the solenoid valves 207 with the passages departing from the syrup containers (not shown).

Figure 3 is an elevation of the distributing block 5 on an enlarged scale, as viewed from the direction of the machine frame and showing the holes 205 into which the couplings 117 are inserted, as well as the passages 215 that carry the syrups to the manifolds 60 inside the nozzle 6.

Figure 4 is a transverse section through the block 5 and nozzle 6 illustrated and described earlier. As can be seen, the grooves 306 communicate with the ice cream dispensing channel 206 via a series of passages 316. The passage 215 connects the syrup inlet means 107, 117 to the grooves 306, and hence to the manifolds 60.

The manner in which the machine according to the invention operates will be clear from the following. When the operator is preparing to make a "soft" ice cream flavoured with the appropriate syrup, he first selects the desired syrup and then actuates the pump connected to the container of the selected syrup, the solenoid valve 207 which controls the respective inlet passage, and at the same time the dispensing means, that is to say he pulls down the lever 104, thereby raising the plunger 4 and so allowing the ice cream to emerge from the dispensing hole 403. The ice cream will then flow through the dispensing channel 405; here it will come into contact with the syrup which, via the passage 107 and the passage 215 of the block 5, has entered the manifold 60 and thence, via the passages 316, has entered the ice cream dispensing channel 206. When it is desired to change the type of syrup essence to be added to the ice cream, the operator simply operates a different valve 207; the syrup in question will travel along a course similar to the course described above, eventually reaching the ice cream inside the dispensing channel 206 but without being contaminated by, and without contaminating, the previously used syrup or its distributing means.

The grooves 306 and the passages 316 advantageously make it possible to distribute the syrup on the flow of ice cream emerging from the dispensing means in a more regular and uniform manner, completely surrounding the flow of ice cream as it passes through the channel 206.

The machine according to the invention has here been illustrated as fitted with a metering block 5 and a corresponding inlet block 6 capable of providing three different types of syrup; it is obviously possible to construct a machine according to the invention offering a greater number of syrup essences.

## Claims

1. Machine for making soft ice creams, comprising essentially at least one working chamber (100) in communication with a supply tank and closed at the front by a hatch (2) supporting the ice cream dispensing means, which ice cream dispensing means comprise a cylindrical part (3) communicating, from near its lower end, with said working chamber (100) and being provided with an axial dispensing hole (103) and a plunger (4) that can be moved inside said cylinder (3) and controls the dispensing of the ice cream, and provided, at the dispensing hole (103), with means (5) of distributing two or more syrup essences onto the ice cream, the machine being characterized in that said means (5) of distributing the syrups comprise two or more annular manifolds (306) coaxial with said dispensing hole (403), each communicating with an inlet passage (205) connected to a container of syrup essence, and each provided with a ring of radial holes (316) leading into the flow of ice cream as it passes out of said dispensing hole (103), said manifolds (306) being mounted on the end of the dispensing cylinder (31) having the dispensing hole (403).

2. Machine according to Claim 1, in which said annular manifolds (306) are formed integrally, in the form of grooves, in a cylindrical nozzle (6) in which a central axial channel (206) communicates with said grooves (306) through a series of radial passages (316) for each of the grooves (306), said nozzle (6) being inserted in a distributing block (5) consisting of a parallelepiped containing an axial cylindrical cavity (206) and, on one face, a series of holes (316) communicating with passages perpendicular to said cavity and opening into it, these holes being situated on mutually parallel transverse planes and being connected to the inlet passages of the syrup essences.

3. Machine according to Claim 1 or 2, in which means for regulating the flow of the syrups are provided in the form of solenoid valves.
